# FASCICULE DE BREVET EUROPEEN

(11) **EP 3 529 087 B1**
(45) Date de publication et mention de la délivrance du brevet: **07.04.2021**
(21) Numéro de dépôt: 17794024.4
(22) Date de dépôt: 20.10.2017
(51) Int. Cl.: B60C 9/20, B60C 9/24, B60C 9/18, B60C 11/00

(54) **PNEUMATIQUE COMPRENANT UNE ARCHITECTURE OPTIMISÉE**
REIFEN MIT OPTIMIERTER ARCHITEKTUR
TYRE HAVING AN OPTIMISED ARCHITECTURE

(30) Priorité: 21.10.2016 FR 1660246
(43) Date de publication de la demande: 28.08.2019
(73) Titulaire: Compagnie Générale des Etablissements Michelin, 63000 Clermont-Ferrand (FR)
(72) Inventeur: ABINAL, Richard, 63040 Clermont-Ferrand Cedex 9 (FR); ALBOUY, Mathieu, 63040 Clermont-Ferrand Cedex 9 (FR); BRUNEAU, François-Xavier, 63040 Clermont-Ferrand Cedex 9 (FR); CHARREIRE, Cyril, 63040 Clermont-Ferrand Cedex 9 (FR); FEVRIER, Pierre, 63040 Clermont-Ferrand Cedex 9 (FR); PALLOT, Patrick, 63040 Clermont-Ferrand Cedex 9 (FR)
(74) Mandataire: Millanvois, Patrick Jacques Jean
(86) Numéro de dépôt international: PCT/FR2017/052887
(87) Numéro de publication internationale: WO 2018/073548

(56) Documents cités:
- EP-A1- 1 338 441
- EP-A2- 0 719 659
- WO-A1-2012/069603
- WO-A1-2013/053879
- FR-A- 1 290 231
- JP-A- S63 151 503
- JP-A- 2011 031 841
- JP-A- 2012 201 126

## Description

### DOMAINE DE L'INVENTION

La présente invention concerne un pneumatique destiné à être monté sur un véhicule, et plus particulièrement le sommet d'un tel pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Le plan circonférentiel médian dit plan équateur divise le pneumatique en deux demi tores sensiblement symétriques, le pneumatique pouvant présenter des dissymétries de bande de roulement, d'architecture, liées à la précision de fabrication ou au dimensionnement.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équateur, selon la direction axiale, que » et « plus éloigné du plan équateur, selon la direction axiale, que ». Une « distance radiale » est une distance par rapport à l'axe de rotation du pneumatique, et une « distance axiale » est une distance par rapport au plan équateur du pneumatique. Une « épaisseur radiale » est mesurée selon la direction radiale, et une « largeur axiale » est mesurée selon la direction axiale.

Dans ce qui suit, l'expression « à l'aplomb de » signifie « pour chaque méridien, radialement intérieur dans la limite des coordonnées axiales délimitées par ». Ainsi « les points d'une couche de travail à l'aplomb d'un sillon » désignent pour chaque méridien, l'ensemble des points de la couche de travail radialement intérieurs au sillon dans la limite des coordonnées axiales délimitées par le sillon.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

La bande de roulement d'un pneumatique est délimitée, selon la direction radiale, par deux surfaces circonférentielles dont la plus radialement extérieure est la surface de roulement et dont la plus radialement intérieure est appelée surface de fond de sculpture. La surface de fond de sculpture, ou surface de fond, est définie comme la surface translatée de la surface de roulement radialement vers l'intérieur d'une distance radiale égale à la profondeur de sculpture. Il est courant que cette profondeur soit dégressive sur les portions circonférentielles les plus axialement extérieures, appelées épaules, de la bande de roulement.

De plus, la bande de roulement d'un pneumatique est délimitée, selon la direction axiale, par deux surfaces latérales. La bande de roulement est en outre constituée par un ou plusieurs mélanges caoutchouteux. L'expression « mélange caoutchouteux » désigne une composition de caoutchouc comportant au moins un élastomère et une charge.

Le sommet comprend au moins une armature de sommet radialement intérieure à la bande de roulement. L'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

Pour toute couche d'éléments de renforcement d'armature de sommet, de travail, ou autre, une surface continue, dite surface radialement extérieure (SRE) de la dite couche, passe par le point le plus radialement extérieur de chaque élément de renforcement, de chaque méridien. Pour toute couche d'éléments de renforcement d'armature de sommet, de travail, ou autre, une surface continue, dite surface radialement intérieure (SRI) de la dite couche, passe par le point le plus radialement intérieur de chaque élément de renforcement, de chaque méridien. Les distances radiales entre une couche d'éléments de renforcement et tout autre point, sont mesurées depuis l'une ou l'autre de ces surfaces et de manière à ne pas intégrer l'épaisseur radiale de la dite couche. Si l'autre point de mesure est radialement extérieur à la couche d'éléments de renforcement, la distance radiale est mesurée depuis la surface radialement extérieure SRE à ce point, et respectivement depuis la surface radialement intérieure SRI à l'autre point de mesure si celui-ci est radialement intérieur à la couche d'éléments de renforcement. Ceci permet de prendre des distances radiales cohérentes d'un méridien à l'autre, sans avoir à tenir compte des variations locales possibles liées aux formes des sections des éléments de renforcement des couches.

Afin d'obtenir des performances en adhérence sur sol mouillé, des découpures sont disposées dans la bande de roulement. Une découpure désigne soit un puits, soit une rainure, soit une incision, soit un sillon circonférentiel et forme un espace débouchant sur la surface de roulement.

Une incision ou une rainure présente, sur la surface de roulement, deux dimensions principales caractéristiques : une largeur W et une longueur Lo, telle que la longueur Lo est au moins égale à 2 fois la largeur W. Une incision ou une rainure est donc délimitée par au moins deux faces latérales principales déterminant sa longueur Lo et reliées par une face de fond, les deux faces latérales principales étant distantes l'une de l'autre d'une distance non nulle, dite largeur W de l'incision ou de la rainure.

La profondeur de la découpure est la distance radiale maximale entre la surface de roulement et le fond de la découpure. La valeur maximale des profondeurs des découpures est nommée profondeur de sculpture D.

Un sillon est une rainure sensiblement circonférentielle, les faces latérales sont sensiblement circonférentielles en ce sens, que leur orientation peut varier localement autour de plus ou moins 45° autour de la direction circonférentielle mais que l'ensemble des motifs appartenant au sillon se retrouve tout autour de la bande de roulement, formant un ensemble sensiblement continu, c'est-à-dire présentant des discontinuités inférieures à 10% en longueur comparativement à la longueur des motifs.

Les sillons circonférentiels délimitent des nervures. Une nervure est composée des motifs de la sculpture compris entre un bord axial du pneumatique et un sillon circonférentiel le plus axialement extérieur voisin, soit compris entre deux sillons circonférentiels voisins.

### ETAT DE LA TECHNIQUE

Un pneumatique doit répondre à de multiples critères de performance portant sur des phénomènes comme l'usure, l'adhérence sur différents types de sol, la résistance au roulement, le comportement dynamique. Ces critères de performance conduisent parfois à des solutions s'opposant à d'autres critères. Ainsi pour une bonne performance en adhérence, le matériau caoutchouteux de la bande de roulement doit être dissipatif et mou. En revanche pour obtenir un pneumatique performant en comportement, notamment en réponse dynamique sur un effort transversal au véhicule et donc principalement dans l'axe du pneumatique, le pneumatique doit avoir un niveau de rigidité, notamment sous effort transversal, suffisamment élevé. Pour une dimension donnée, la rigidité du pneumatique dépend de la rigidité des différents éléments du pneumatique que sont la bande de roulement, l'armature de sommet, les flancs et les bourrelets. La rigidification de la bande de roulement est traditionnellement obtenue soit à travers la rigidification des matériaux caoutchouteux, soit à travers la diminution de la profondeur de la sculpture ou de la diminution du niveau d'entaillement de la sculpture.

Pour pallier le problème, les fabricants de pneumatiques ont par exemple changé le matériau caoutchouteux en le rigidifiant notamment par des fibres, comme mentionné dans les documents FR 3 014 442 et FR 2 984 230.

Ces solutions ne sont pas toujours satisfaisantes. Diminuer la profondeur sculpture limite la performance en usure et en adhérence sur route mouillée. Rigidifier le matériau caoutchouteux limite les capacités d'adhérence sur sol mouillé et sol sec, et augmente aussi les émissions sonores du pneumatique en roulage. Réduire le volume de creux de la sculpture réduit les capacités d'adhérence sur sol mouillé et plus particulièrement en cas de forte hauteur d'eau au sol. Il est par ailleurs important de maintenir une certaine épaisseur de matériaux caoutchouteux entre la face de fond des découpures, rainures ou sillons et les éléments de renforcement de l'armature de sommet la plus radialement extérieure pour garantir l'endurance du pneumatique.

D'autres solutions ont notamment été divulguées dans JP2012201126, JP2011031841, EP0719659, FR1290231, JPS63151503, EP1338441, WO2013053879, WO2012069603.

### RESUME DE L'INVENTION

L'objectif principal de la présente invention est donc d'augmenter la performance en comportement du pneumatique, en améliorant ses performances en adhérence, et plus particulièrement d'adhérence mouillé, en résistance au roulement, sans modifier ses performances en usure et en endurance du sommet.

Cet objectif est atteint par Pneumatique comprenant :
- une bande de roulement destinée à entrer en contact avec un sol par l'intermédiaire d'une surface de roulement,
- la surface de roulement comprenant des rainures, les rainures formant un espace débouchant sur la surface de roulement et étant délimitée par au moins deux faces latérales principales reliées par une face de fond,
- au moins une rainure étant sensiblement circonférentielle, appelée sillon circonférentiel ayant une largeur W définie par la distance entre les deux faces latérales, au moins égale à 5 mm et une profondeur D définie par la distance radiale maximale entre la surface de roulement et la face de fond, au moins égale à 4 mm,
- au moins une nervure,
- le pneumatique comprenant en outre une armature de sommet, radialement intérieure à la bande de roulement, comprenant une armature de travail,
- l'armature de travail comprenant au moins une couche de travail,
- la couche de travail la plus radialement extérieure s'étendant radialement depuis une surface radialement intérieure (SRI) jusqu'à une surface radialement extérieure (SRE),
- la couche de travail la plus radialement extérieure comprenant des éléments de renforcement, continus d'un bord axialement extérieur de la couche de travail au bord axialement extérieur opposé, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°,
- la couche de travail la plus radialement extérieure comprenant au moins une ondulation à l'aplomb d'une nervure,
- la au moins une ondulation de la couche de travail la plus radialement extérieure étant telle que la portion de de la couche de travail de l'ondulation est radialement extérieure aux points de la couche de travail à l'aplomb du centre de la face de fond du sillon circonférentiel le plus proche de ladite ondulation,
- l'au moins une ondulation de la couche de travail la plus radialement extérieure étant telle qu'à l'aplomb de la nervure de la surface de roulement comprenant une ondulation, la distance radiale minimale (do), entre la surface radialement extérieure (SRE) de la couche de travail la plus radialement extérieure et la surface de roulement, est inférieure d'au moins 1 mm à la distance radiale (dc) entre la surface radialement extérieure (SRE) de la couche de travail la plus radialement extérieure et la surface de roulement, distance à l'aplomb du sillon le plus proche de l'ondulation considérée,
- la distance radiale minimale (du) entre la surface radialement extérieure (SRE) de la couche la plus radialement extérieure de l'armature de sommet et la surface de roulement est au plus égale à la profondeur D du sillon circonférentiel le plus proche augmentée de 2 mm.

Pour améliorer la réponse dynamique sous effort axial, il faut donc rigidifier le pneumatique dans sa composante axiale qui est, pour l'armature de sommet, essentiellement due à la rigidité des couches de travail métalliques et à la distance entre celles-ci et la surface de roulement. En effet les couches de travail métalliques sont rigides en traction et en compression de par leurs matériaux. Elles sont également rigides en cisaillement de par leurs angles avec la direction circonférentielle et leur couplage assuré par la faible épaisseur de matériaux caoutchouteux entre elles.

En revanche les matériaux entre les couches de travail et la surface de roulement travaillent en cisaillement en cas d'effort transversal. Plus l'épaisseur radiale de ces matériaux est importante moins cette partie du sommet est rigide, plus la performance en réponse dynamique sous effort axial diminue. Il faut donc réduire cette distance. Cependant, il faut maintenir la profondeur de sculpture D afin de préserver les performances en usure et en adhérence sur sol mouillé du pneumatique.

Par ailleurs il faut préserver la distance radiale (d1), dite profondeur de sous-creux, entre la surface radialement extérieure (SRE) de la couche de travail la plus radialement extérieure et la face de fond du sillon circonférentiel, pour protéger les éléments de renforcement des différentes couches du sommet des perforations. Une solution à ce problème consiste à conserver inchangées la profondeur de sculpture D et la profondeur de sous-creux (d1) mesurées à l'aplomb des rainures majeures et des sillons, et à diminuer la distance radiale (do) entre les couches de travail et la surface de roulement à l'aplomb des portions de la bande de roulement dénuées de rainures majeures et donc de sillons.

Compte-tenu du fait que la surface de roulement d'un pneumatique est sensiblement cylindrique, cette solution revient à onduler radialement les couches de travail, selon des ondulations axiales. Cette solution va à l'encontre des modes de fabrication des pneumatiques pour lesquels les couches de travail sont posées sur des formes sensiblement cylindriques, de base circulaire et de génératrice une droite perpendiculaire à la base. Les pneumatiques de l'état de la technique présentent après cuisson, dans les plans méridiens, une courbure régulière sans point d'inflexion ou très localisée aux gommes de bordure sur moins de 10% de la couche de travail.

En effet il est courant de découpler très localement certaines couches aux extrémités des éléments de renforcement qui les constituent. Ces couches sont disposées à un rayon sensiblement constant. Pour les pneumatiques selon l'invention, ces couches sont disposées avec des variations de rayons sur une surface minimale pour assurer les avantages escomptés et présentent au moins un point d'inflexion dans le plan méridien.

En revanche disposer des ondulations axiales est la méthode la moins onéreuse avec le type d'outil de fabrication actuel, en temps de cycle, ou en modification de l'outillage. Il convient en effet soit de modifier la génératrice de la forme cylindrique, soit de poser des gommes de bourrage circonférentielles.

Par ailleurs, onduler des couches d'éléments de renforcement soumis à des efforts de compression peut sembler sensibiliser le pneumatique à des variations de la géométrie de la surface de roulement dégradant les performances comme la tenue à l'usure irrégulière, le balourd, etc. Néanmoins la solution a de très bonnes performances sur ces critères.

De plus onduler des couches d'éléments de renforcement soumis à des efforts de compression va à l'encontre des préconisations pour lutter contre le flambement des structures. En effet, créer une discontinuité de rayon de courbure revient à créer des surcontraintes où pourrait avoir lieu le flambement. Cependant dans le pneumatique, les efforts sont très localisés de sorte qu'une partie du sommet est en tension quand une autre est en compression, à une échelle très inférieure à celle des ondulations. Ainsi les ondulations pratiquées dans les limites de l'invention, ne nuisent pas à l'endurance du pneumatique.

Pour éviter tout problème d'endurance du sommet lié aux chocs lorsque le pneumatique roule sur une route où est présent un obstacle, ou à la fatigue du matériau caoutchouteux en extrémité des éléments de renforcement, il est important que les éléments de renforcement de la couche de travail soient continus d'un bord axialement extérieur de la couche de travail au bord axialement extérieur opposé. Les éléments de renforcement de la couche de travail comportent un ou plusieurs fils métalliques tressés ou non. Il est important que ces fils soient très majoritairement continus dans toute la largeur de la couche de travail de manière à ce que la couche de travail soit elle-même continue.

L'expérience montre que pour améliorer la performance en tenue dynamique sous effort transversal, un des critères suffisant en lui-même est de diminuer la distance (do) entre la surface radialement extérieure (SRE) de la couche de travail la plus radialement extérieure et la surface de roulement. Ceci permet de réduire les épaisseurs cisaillées de matériaux caoutchouteux de la bande de roulement et de réduire la production de chaleur due à l'hystérèse de ces matériaux. Ces effets sont bénéfiques à la fois vis-à-vis de la rigidité de la bande de roulement qui dépend de la température, et vis-à-vis des performances en résistance au roulement et en endurance. L'ondulation de la couche de travail permet en plus d'accroitre la rigidité axiale des pneumatiques par l'augmentation de l'inertie de flexion sur chant du sommet, ce qui induit une amélioration sensible la performance en comportement. Par ailleurs, dans certains pneumatiques, le sommet ne comprend qu'une seule couche de travail et l'invention fonctionne également dans ce cas.

Cette distance (do) est diminuée en créant au moins une ondulation dans la couche de travail, de sorte que cette ondulation ou partie ondulée de la couche de travail soit radialement extérieure à la partie de la couche de travail à l'aplomb du sillon circonférentiel le plus proche de ladite ondulation. Il ne s'agit pas de considérer comme ondulée une couche de travail non ondulée mais respectant le critère de la diminution de la distance (do) par une diminution de la profondeur de sculpture sur une zone donnée. Cette caractéristique est par ailleurs connue notamment pour des pneumatiques pour des véhicules de tourisme dont la profondeur sculpture est plus faible sur les bords axialement extérieurs du pneumatique, dites épaules, que dans les sillons les plus proches. Dans les pneumatiques selon l'état de la technique, dans la partie aux épaules où la distance radiale (do) diminue, la couche de travail est soit au même rayon, soit radialement intérieure aux parties de la même couche de travail à l'aplomb du sillon circonférentiel le plus proche.

L'invention fonctionne également en positionnant une ou des ondulations dans une ou des parties d'une ou des épaules du pneumatique.

Le sous-creux (d1) doit être conservé dans les rainures majeures et les sillons circonférentiels. Les rainures mineures ou les incisions sont moins sensibles aux perforations et agressions par des obstacles, car elles sont protégées par le matériau caoutchouteux leur donnant leur caractéristique technique de rainure de faible profondeur ou de faible largeur.

Les couches de faibles rigidités, proportionnellement aux couches de travail, comme les couches de protection, métalliques ou non, les couches de frettages, comportant des éléments de renforcement formant, avec la direction circonférentielle (XX') du pneumatique, un angle B au plus égal à 10° en valeur absolue, n'ont pas les rigidités en compression et en cisaillement suffisantes, en raison de leurs matériaux parfois textile, de leurs angles de pose, pour qu'une ondulation seulement de ces dernières, apporte au problème une solution au même niveau d'efficacité que l'invention. Ces couches de protection ou de frettage sont optionnelles dans un pneumatique et ne conditionnent pas l'intérêt de la solution.

Il apparaît qu'une ondulation de la surface radialement extérieure de la couche de travail, à l'aplomb d'une seule nervure, par exemple centrale et symétrique par rapport au plan circonférentiel médian, est suffisante pour mesurer un gain de performance en dynamique sous effort transversal. Cette solution peut avoir un avantage en termes d'usure irrégulière, ou de valeur de poussée axiale en fonction du sens de la poussée en fonction du carrossage du véhicule. Néanmoins cette ondulation unique peut également se situer sous une nervure quelconque et notamment sous une des nervures les plus radialement extérieures. Ces choix peuvent être faits en tenant compte de l'aspect directionnel ou axisymétrique des pneumatiques et du carrossage de la voiture.

L'amplitude de cette ondulation doit être au moins égale à 1 mm, pour avoir des effets significatifs à l'échelle du pneumatique, ainsi la distance radiale (do) entre la surface radialement extérieure (SRE) de la couche de travail la plus radialement extérieure et la surface de roulement est inférieure d'au moins 1 mm à la distance radiale (dc) entre la surface radialement extérieure (SRE) de la couche de travail la plus radialement extérieure et la surface de roulement, distance à l'aplomb du centre de la face de fond du sillon circonférentiel le plus proche de ladite ondulation.

Préférentiellement à l'aplomb d'au moins une nervure de la surface de roulement comprenant une ondulation, la distance radiale minimale (do) entre la surface radialement extérieure (SRE) de la couche de travail la plus radialement extérieure et la surface de roulement est inférieure d'au moins 1.5 mm, préférentiellement 2 mm, à la distance radiale (dc) entre la surface radialement extérieure de la couche de travail la plus radialement extérieure et la surface de roulement, distance à l'aplomb du sillon circonférentiel le plus proche de l'ondulation considérée. Les paramètres de conception permettant le réglage de la dynamique sous effort transverse important, au moins de l'ordre de 50% de la charge nominale du pneumatique, sont :
- Le nombre de nervures et la dimension des ondulations de la couche de travail la plus radialement extérieure. Plus l'ondulation est étendue plus le pneumatique est rigide sous effort transversal, et plus il est performant en résistance au roulement. Une seule nervure peut représenter 15% de la largeur axiale de la couche de travail la plus radialement extérieure. Il est courant d'avoir 3, 4 à 5 nervures et que les sillons représentent autour de 20% de cette largeur.
- L'amplitude de l'ondulation au moins égale à 1 mm mais limitée à 5 mm en raison des rayons de courbures à imposer aux couches de travail métalliques, rigides et donc peu déformables.

Une solution préférée est donc qu'à l'aplomb d'au moins une nervure de la surface de roulement comprenant une ondulation, la distance radiale (do) entre la surface radialement extérieure (SRE) de la couche de travail la plus radialement extérieure et la surface de roulement est inférieure d'au plus 5 mm, préférentiellement 3 mm, à la distance radiale (dc) entre la surface radialement extérieure (SRE) de la couche de travail la plus radialement extérieure et la surface de roulement, distance à l'aplomb du sillon circonférentiel le plus proche de l'ondulation considérée.

Pour une performance optimale en perforation et agression du sommet, sans pénaliser la résistance au roulement, la distance radiale (d1) entre la surface radialement extérieure (SRE) de la couche de travail la plus radialement extérieure et la face de fond des sillons circonférentiels, est au moins égale à 1 mm et au plus égale à 5 mm, préférentiellement au moins égale à 2 mm et au plus égale à 4 mm. En deçà de limites inférieures, le pneumatique pourrait être trop sensible aux agressions. Au-delà des limites supérieures, la résistance au roulement du pneumatique serait pénalisée.

Il est avantageux qu'une ondulation de la couche de travail la plus radialement extérieure soit présente à l'aplomb de toutes les nervures de la surface de roulement afin de pousser l'avantage de la solution à son optimum.

Une solution préférée est qu'une ondulation de la couche de travail la plus radialement extérieure est présente uniquement à l'aplomb des nervures de la surface de roulement les plus proches axialement du plan circonférentiel médian, de part et d'autre de ce plan, afin d'obtenir une performance juste nécessaire par rapport à l'augmentation du surcoût de fabrication qu'amène l'ondulation de la couche de travail la plus radialement extérieure.

Il est avantageux que la bande de roulement, par exemple dans une rainure ou un sillon circonférentiel de la bande de roulement, comprenne au moins un témoin d'usure, et que la distance radiale minimale (du) entre la surface radialement extérieure (SRE) de la couche la plus radialement extérieure de l'armature de sommet et la surface de roulement soit au moins égale à la distance radiale (df) entre la surface de roulement et le point le plus radialement extérieur du témoin d'usure. En effet, il est important que l'utilisateur puisse percevoir que le pneumatique est usé, grâce au témoin d'usure et cela avant de voir les éléments de renforcement de la couche la plus radialement extérieure de l'armature de sommet apparaître au niveau de la surface de roulement.

Avantageusement la distance radiale minimale (du) entre la surface radialement extérieure (SRE) de la couche la plus radialement extérieure de l'armature de sommet et la surface de roulement est au plus égale à la profondeur D du sillon circonférentiel le plus proche augmentée de 2 mm et au moins égale à la profondeur D du sillon circonférentiel le plus proche diminuée de 2 mm. Cette solution permet un positionnement idéal de la couche d'éléments de renforcement la plus radialement extérieure de l'armature de sommet et la surface de roulement. La distance radiale minimale (du) entre la surface radialement extérieure (SRE) de la couche la plus radialement extérieure de l'armature de sommet et la surface de roulement, est forcément mesurée sur la portion radialement extérieure de l'armature sommet, donc au niveau d'une ondulation.

Préférentiellement la profondeur D d'une rainure majeure ou d'un sillon circonférentiel est au moins égale à 6 mm, et au plus égale à 20 mm. Les profondeurs de sculpture entre 6 et 10 mm permettent un bon compromis entre les performances en usure et en résistance au roulement dans de nombreux pneumatiques de tourisme. Les profondeurs de sculpture entre 10 et 20 mm sont intéressantes pour les mêmes compromis dans les pneumatiques pour véhicules portant de lourdes charges. L'invention n'est pas limitée à des pneumatiques d'un usage particulier.

Dans le cas où la couche d'éléments de renforcement la plus radialement extérieurs est une couche de frettage, il est avantageux que la couche d'éléments de renforcement la plus radialement extérieure de l'armature de sommet comprenne des éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

Une solution préférée est qu'au moins une gomme de bourrage ayant une épaisseur radiale au moins égale à 0.3 mm est positionnée à l'aplomb de toute ondulation de la couche de travail la plus radialement extérieure. Ceci afin de permettre l'ondulation des nappes à la fabrication et à la cuisson. Il est possible de disposer plusieurs gommes de bourrage à l'aplomb de la ou des ondulations à différentes valeurs de rayons avec différentes propriétés en fonction du cahier des charges du pneumatiques. Si une seule gomme de bourrage est disposée, son épaisseur maximale est approximativement égale, pour une ondulation donnée, à la distance radiale entre le point le plus radialement extérieur de la surface radialement extérieure de la couche de travail la plus radialement extérieure au niveau de l'ondulation et la surface radialement extérieure de la couche de travail la plus radialement extérieure à l'aplomb du centre de la face de fond de la rainure majeure la plus proche de ladite ondulation.

Il est avantageux que, la bande de roulement étant constituée par un mélange caoutchouteux, la gomme de bourrage, disposée à l'aplomb de la ou des ondulations, soit un mélange caoutchouteux ayant une perte dynamique tanδ1, mesurée à une température de 10°C et sous une contrainte de 0.7 MPa à 10 Hz, au plus égale et préférentiellement inférieure de 30% à la perte dynamique tanδ2 du matériau caoutchouteux constitutif de la bande de roulement, mesurée à une température de 10°C et sous une contrainte de 0.7 MPa à 10 Hz. Pour un matériau de bourrage de même hystérèse, le gain en résistance au roulement est donné seulement par la diminution des sollicitations en cisaillement que ce matériau subit. Le matériau de bourrage ne subissant pas les mêmes contraintes que le matériau caoutchouteux constitutif de la bande de roulement, il est possible de modifier ses caractéristiques de manière à améliorer davantage la résistance au roulement. 30% de baisse d'hystérèse amène un gain significativement plus élevé pour l'invention.

Il est préféré que l'armature de sommet consiste en 2 nappes de travail ayant des angles opposés et une nappe de frettage, comme de nombreuses architectures de sommet actuelles.

Avantageusement les gommes de bourrage à l'aplomb des ondulations sont radialement intérieures à toutes les couches de travail de l'armature de travail de sorte que les couches de travail ne soient découplées en aucun point du sommet par ces gommes de bourrage. Cette disposition garantit une rigidité transversale du sommet élevée.

Afin de ne pas créer de rayons de courbure trop importants sur l'armature de carcasse pouvant générer localement du flambement en raison des efforts de compression que l'armature de carcasse subit, une solution est de disposer les gommes de bourrage à l'aplomb des ondulations, radialement à l'extérieur des couches de carcasse constituant l'armature de carcasse.

### BREVE DESCRIPTION DES DESSINS

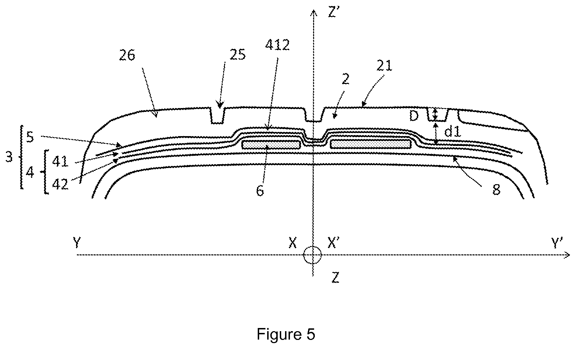

Les caractéristiques et autres avantages de l'invention seront mieux compris à l'aide des figures 1 à 5, les dites figures n'étant pas représentées à l'échelle mais de façon simplifiée, afin de faciliter la compréhension de l'invention :
- La figure 1 est une partie de pneumatique, en particulier son architecture, sa bande de roulement et un sillon circonférentiel (25) et une nervure (26).
- la figure 2 représente une coupe méridienne du sommet d'un pneumatique selon l'invention avec une ondulation sous une nervure (26) et illustre les différentes distances radiales do, d1, D, du, dc et une gomme de bourrage (6) propre à créer une ondulation (412) de la couche de travail la plus radialement extérieure.
- la figure 3 représente une coupe méridienne du sommet d'un pneumatique selon l'invention avec une ondulation sous chaque nervure (26), chaque nervure pouvant être d'épaisseur radiale et de largeur axiale différente, ainsi que la distance radiale df.
- la figure 4 représente une coupe méridienne du sommet d'un pneumatique selon l'invention avec une ondulation sous chaque nervure (26), les plus axialement proches du plan circonférentiel médian.
- la figure 5 représente une coupe méridienne du sommet d'un pneumatique selon l'invention avec une ondulation sous certaines nervures (26), les gommes de bourrages étant toutes radialement intérieures aux couches de travail et radialement extérieure à la couche de carcasse (8) constituant l'armature de carcasse.

De nombreuses combinaisons d'agencement et de dimension des ondulations sous les nervures, sont possibles. Les figures et la description ne sauraient toutes les décrire explicitement.

### DESCRIPTION DETAILLEE DES DESSINS

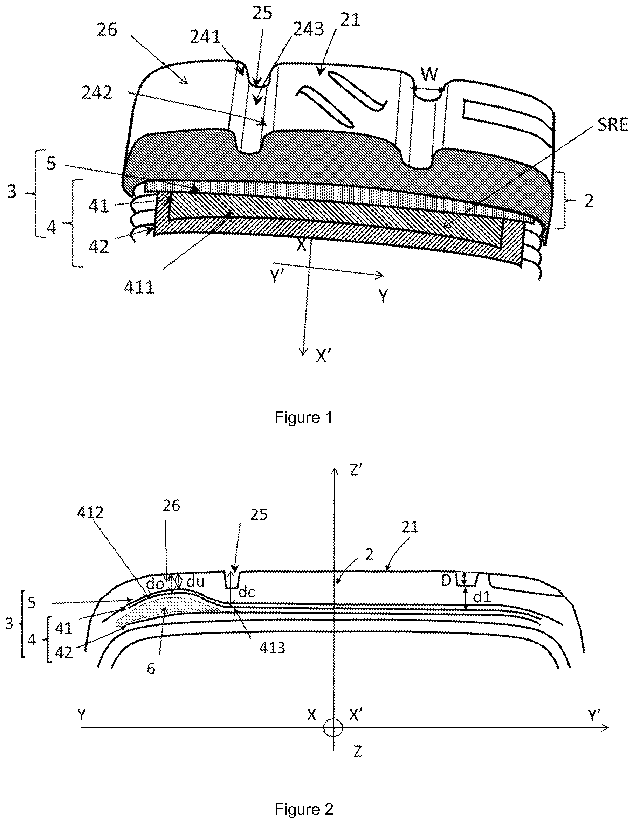

La figure 1 représente une vue en perspective d'une partie du sommet d'un pneumatique. A chaque plan méridien est associé un repère cartésien (XX', YY', ZZ'). Le pneumatique comporte une bande de roulement 2 destinée à entrer en contact avec un sol par l'intermédiaire d'une surface de roulement 21. Dans la bande de roulement, sont disposées des rainures et des sillons circonférentiels 25 de largeur W possiblement différentes d'un sillon à l'autre, ayant chacune des profils principaux 241 et 242 et une face de fond 243. Le pneumatique comprend en outre une armature de sommet 3 comprenant une armature de travail 4 et ici pour l'exemple, une armature de frettage 5. L'armature de travail comprend au moins une couche de travail et ici pour l'exemple deux couches de travail 41 et 42 comprenant chacune des éléments de renforcement parallèles entre eux. Est représentée également la surface radialement extérieure SRE de la couche de travail 41 la plus radialement extérieure.

La figure 2 représente schématiquement la coupe méridienne du sommet du pneumatique selon l'invention. Elle illustre en particulier une ondulation de la couche de travail la plus radialement extérieure 41 et une gomme de bourrage 6 disposée à l'aplomb de celle-ci. La figure 2 illustre également les distances radiales suivantes :
- D : la profondeur d'une rainure, distance radiale maximale entre la surface de roulement 21 et la face de fond 243 du sillon circonférentiel 25,
- dc : distance radiale entre la surface radialement extérieure SRE de la couche de travail 41 la plus radialement extérieure et la surface de roulement 21, distance à l'aplomb du centre de la face de fond 243 du sillon circonférentiel 25 la plus proche de ladite ondulation 412.
- df : la distance radiale entre la surface de roulement (21) et le point le plus radialement extérieur du témoin d'usure (7).
- do : la distance radiale entre la surface radialement extérieure SRE de la couche de travail 41 la plus radialement extérieure et la surface de roulement au niveau de l'ondulation 412.
- du : la distance radiale minimale entre la surface radialement extérieure (SRE) de la couche la plus radialement extérieure de l'armature de sommet 3 et la surface de roulement 21.
- d1 : la distance radiale entre la surface radialement extérieure SRE de la couche de travail la plus radialement extérieure 41 et la face de fond 243 des sillons circonférentiels 25.

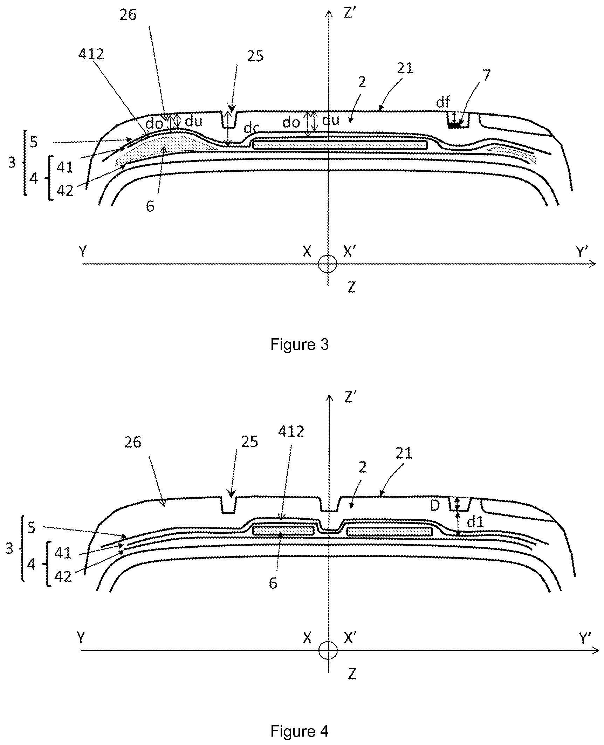

La figure 3 représente schématiquement la coupe méridienne du sommet du pneumatique selon l'invention. Elle illustre en particulier df : la distance radiale entre la surface de roulement 21 et le point le plus radialement extérieur du témoin d'usure 7.

Une coupe méridienne du pneumatique est obtenue par découpage du pneumatique selon deux plans méridiens. Cette coupe sert à déterminer les différentes distances radiales, le centre des faces de fond des rainures et des sillons.

L'invention a été réalisée sur un pneumatique A de dimension 305/30 ZR20 destiné à équiper un véhicule de tourisme. Les profondeurs D des rainures de la sculpture sont comprises entre 4 et 7 mm et égale à 7 mm pour les sillons circonférentiels, pour des largeurs W variables pour les rainures et égales à 15 mm pour les sillons. L'armature sommet est composée de deux couches de travail dont les éléments de renforcement font un angle de + ou - 38° avec la direction circonférentielle et d'une couche de frettage dont les éléments de renforcement font un angle de + ou - 3° avec la direction circonférentielle. Les éléments de renforcement de la couche de travail, sont des câbles métalliques continus.

La couche de travail la plus radialement extérieure est ondulée sous les 5 nervures de la bande de roulement. La distance radiale (do) entre la surface radialement extérieure (SRE) de la couche de travail (41) la plus radialement extérieure et la surface de roulement est inférieure de 2 mm à la distance radiale (dc) entre la surface radialement extérieure (SRE) de la couche de travail (41) la plus radialement extérieure et la surface de roulement, distance à l'aplomb du centre de la face de fond (243) du sillon circonférentiel (25) le plus proche de l'ondulation pour les 3 nervures axialement intérieures et 1 mm pour les 2 nervures les plus axialement intérieures. De même la largeur axiale des ondulations est égale à 21 mm pour les 3 nervures axialement intérieures et égale à 7 mm pour les 2 nervures les plus axialement extérieures. La distance radiale (d1) entre la surface radialement extérieure (SRE) de la couche de travail la plus radialement extérieure (41) et la face de fond (243) des sillons circonférentiels (25), est comprise entre 2 mm et 3,5 mm.

Les ondulations sont créées à l'aide de gommes de bourrages disposées à l'aplomb des 5 nervures de la bande de roulement. Ces gommes de bourrage sont radialement extérieures à la couche de carcasse et radialement intérieures aux deux couches de travail assurant par cette disposition une géométrie plane sous le sommet, optimale de la couche de carcasse et un couplage optimal des dites couches de travail.

Les pneumatiques A ont été comparés avec les pneumatiques B de même dimension, possédant les mêmes caractéristiques à cela près que les couches de travail n'étaient pas ondulées.

Le mélange de bourrage utilisé pour créer les ondulations, a une perte dynamique tanδ1, mesurée à une température de 10°C et sous une contrainte de 0.7 MPa à 10 Hz, inférieure de 60% à celle du matériau caoutchouteux constitutif de la bande de roulement.

Le gain en résistance au roulement a été évalué sur une machine standard pour des mesures normalisées ISO 2850 :2009. Les tests montrent un gain de plus 10% par rapport au pneumatique B de référence.

Par ailleurs, une mesure de la caractéristique Dz du modèle de comportement des pneumatiques, dit Pacejka, bien connue de l'homme de l'art, montre une augmentation de cette caractéristique pour une pression à 2.6b à chaud de 13%. Le gain en adhérence sol sec varie entre 1 et 5% selon les conditions de sollicitation.

Les pneumatiques ont également été montés sur un véhicule de type sportif et testés sur un circuit virageux propre à générer des efforts de transversaux importants. Un pilote professionnel, formé à l'évaluation des pneumatiques, compare les pneumatiques A selon l'invention et les pneumatiques B selon l'état de la technique et suivant un processus d'essais rigoureux, dans les mêmes conditions de température, de condition de sol de roulage, sans connaître les caractéristiques des pneumatiques testés, en répétant la mesure. Le pilote note les pneumatiques. Dans tous les essais effectués, les pneumatiques A selon l'invention surclasse les pneumatiques B en terme de comportement véhicule, tenue de route, sur sol sec et en terme d'adhérence. Par ailleurs la performance de comportement est plus constante au cours d'un test de comportement sur véhicule avec un pneumatique selon l'invention qu'avec un pneumatique selon l'état de la technique.

## Revendications

1. Pneumatique (1) pour véhicule comprenant :
• une bande de roulement (2) destinée à entrer en contact avec un sol par l'intermédiaire d'une surface de roulement (21),
• la surface de roulement comprenant des rainures, les rainures formant un espace débouchant sur la surface de roulement (21) et étant délimitée par au moins deux faces latérales principales (241, 242) reliées par une face de fond (243),
• au moins une rainure étant sensiblement circonférentielle, appelée sillon circonférentiel (25) ayant une largeur W définie par la distance entre les deux faces latérales (241, 242), au moins égale à 5 mm et une profondeur D définie par la distance radiale maximale entre la surface de roulement (21) et la face de fond (243), au moins égale à 4 mm,
• au moins une nervure (26)
• le pneumatique (1) comprenant en outre une armature de sommet (3), radialement intérieure à la bande de roulement (2), comprenant une armature de travail (4),
• l'armature de travail (4) comprenant au moins une couche de travail (41, 42) comprenant une couche de travail (41) la plus radialement extérieure (41), la couche de travail (41) la plus radialement extérieure s'étendant radialement depuis une surface radialement intérieure jusqu'à une surface radialement extérieure (SRE), la couche de travail (41) la plus radialement extérieure comprenant des éléments de renforcement (411), continus d'un bord axialement extérieur de la couche de travail au bord axialement extérieur opposé, au moins partiellement métalliques enrobés par un matériau élastomérique, parallèles entre eux et formant avec la direction circonférentielle (XX') du pneumatique, un angle orienté dont la valeur absolue est au moins égale à 15° et au plus égale à 50°, la couche de travail (41) la plus radialement extérieure comprenant au moins une ondulation (412) à l'aplomb d'une nervure (26), la au moins une ondulation (412) de la couche de travail (41) la plus radialement extérieure étant telle que la portion de la couche de travail (41) de l'ondulation (412) est radialement extérieure aux points de la couche de travail (41) à l'aplomb du centre de la face de fond (243) du sillon (25) le plus proche de ladite ondulation (412),
**caractérisé en ce que** l'au moins une ondulation (412) de la couche de travail (41) la plus radialement extérieure est telle qu'à l'aplomb de la nervure (26) de la surface de roulement (21) comprenant une ondulation (412), la distance radiale minimale (do), entre la surface radialement extérieure (SRE) de la couche de travail (41) la plus radialement extérieure et la surface de roulement (21), est inférieure d'au moins 1 mm à la distance radiale (dc) entre la surface radialement extérieure (SRE) de la couche de travail (41) la plus radialement extérieure et la surface de roulement (21), distance à l'aplomb du sillon (25) le plus proche de l'ondulation (412) considérée,
et **en ce que** la distance radiale minimale (du) entre la surface radialement extérieure (SRE) de la couche la plus radialement extérieure de l'armature de sommet (3) et la surface de roulement (21) est au plus égale à la profondeur D du sillon circonférentiel (25) le plus proche augmentée de 2 mm.

2. Pneumatique selon la revendication précédente **dans lequel** à l'aplomb d'au moins une nervure (26) de la surface de roulement (21) comprenant une ondulation (412), la distance radiale minimale (do) entre la surface radialement extérieure (SRE) de la couche de travail (41) la plus radialement extérieure et la surface de roulement (21) est inférieure d'au moins 1.5 mm, préférentiellement 2 mm, à la distance radiale (dc) entre la surface radialement extérieure (SRE) de la couche de travail (41) la plus radialement extérieure et la surface de roulement (21), distance à l'aplomb du sillon circonférentiel (25) le plus proche de l'ondulation (412) considérée.

3. Pneumatique selon l'une ou l'autre des revendications précédentes **dans lequel** à l'aplomb d'au moins une nervure (26) de la surface de roulement (21) comprenant une ondulation (412), la distance radiale (do) entre la surface radialement extérieure (SRE) de la couche de travail (41) la plus radialement extérieure et la surface de roulement (21) est inférieure d'au plus 5 mm, préférentiellement 3 mm, à la distance radiale (dc) entre les points de la surface radialement extérieure (SRE) de la couche de travail (41) la plus radialement extérieure et la surface de roulement (21), distance à l'aplomb du sillon circonférentiel (25) le plus proche de l'ondulation (412) considérée.

4. Pneumatique selon l'une quelconque des revendications précédentes **dans lequel** la distance radiale (d1) entre la surface radialement extérieure (SRE) de la couche de travail la plus radialement extérieure (41) et la face de fond (243) des sillons circonférentiels (25), est au moins égale à 1 mm et au plus égale à 5 mm, préférentiellement au moins égale à 2 mm et au plus égale à 4 mm.

5. Pneumatique selon l'une quelconque des revendications 1 à 4 **dans lequel,** une ondulation (412) de la couche de travail (41) la plus radialement extérieure est présente à l'aplomb de toutes les nervures (26) de la surface de roulement (21).

6. Pneumatique selon l'une quelconque des revendications 1 à 4 **dans lequel,** une ondulation (412) de la couche de travail (41) la plus radialement extérieure est présente uniquement à l'aplomb des nervures (26) de la surface de roulement (21) les plus proches axialement du plan circonférentiel médian, de part et d'autre de ce plan.

7. Pneumatique disposant de témoins d'usure selon l'une quelconque des revendications précédentes **dans lequel** la distance radiale (du) entre la surface radialement extérieure (SRE) de la couche la plus radialement extérieure de l'armature de sommet (3) et la surface de roulement (21) est au moins égale à la distance radiale (df) entre la surface de roulement (21) et le point le plus radialement extérieur des témoins d'usure (7).

8. Pneumatique selon l'une quelconque des revendications précédentes, **dans lequel** la distance radiale minimale (du) entre la surface radialement extérieure (SRE) de la couche la plus radialement extérieure de l'armature de sommet (3) et la surface de roulement (21) est au moins égale à la profondeur D du sillon circonférentiel (25) le plus proche diminuée de 2 mm.

9. Pneumatique selon l'une quelconque des revendications précédentes **dans lequel** la profondeur D du au moins un sillon circonférentiel (25) est au moins égale à 6 mm, et au plus égale à 20 mm.

10. Pneumatique selon l'une quelconque des revendications précédentes **dans lequel** la couche de l'armature de travail la plus radialement extérieure est constituée d'éléments de renforcement en textile, de préférence de type polyamide aliphatique, polyamide aromatique, combinaison de polyamide aliphatique et de polyamide aromatique, polytéréphtalate d'éthylène ou rayonne, parallèles entre eux et formant, avec la direction circonférentielle (XX') du pneumatique, un angle B au plus égal à 10° en valeur absolue.

11. Pneumatique, selon l'une quelconque des revendications précédentes dans lequel, au moins une gomme de bourrage (6) d'une épaisseur radiale au moins égale à 0.3 mm est à l'aplomb de toute ondulation (412) de la couche de travail (41) la plus radialement extérieure.

12. Pneumatique selon la revendication précédente, la bande de roulement (2) étant constituée par un mélange caoutchouteux, **dans lequel** la gomme de bourrage (6) est un mélange caoutchouteux ayant une perte dynamique tanδ1, mesurée à une température de 10°C et sous une contrainte de 0.7 MPa à 10 Hz, au plus égale et préférentiellement inférieure de 30% à la perte dynamique tanδ2 du matériau caoutchouteux constitutif de la bande de roulement (2), mesurée à une température de 10°C et sous une contrainte de 0.7 MPa à 10 Hz.

13. Pneumatique selon l'une quelconque des revendications précédentes **dans lequel,** l'armature de sommet consiste en 2 nappes de travail ayant des angles opposés et une nappe de frettage.

14. Pneumatique selon l'une quelconque des revendications 11 à 13 **dans lequel,** les gommes de bourrage (6) sont radialement intérieures à toutes les couches de travail (41, 42) de l'armature de travail (4).

## Patentansprüche

1. Luftreifen (1) für ein Fahrzeug, der enthält:
• einen Laufstreifen (2), der dazu bestimmt ist, über eine Lauffläche (21) mit einem Boden in Kontakt zu kommen,
• wobei die Lauffläche Rillen enthält, wobei die Rillen einen an der Lauffläche (21) mündenden Raum bilden und von mindestens zwei Hauptseitenflächen (241, 242) begrenzt werden, die durch eine Bodenseite (243) verbunden sind,
• wobei mindestens eine Rille im Wesentlichen eine Umfangsrille ist, Umfangskerbe (25) genannt, die eine durch den Abstand zwischen den zwei Seitenflächen (241, 242) definierte Breite W mindestens gleich 5 mm und eine durch den maximalen radialen Abstand zwischen der Lauffläche (21) und der Bodenseite (243) definierte Tiefe D mindestens gleich 4 mm hat,
• mindestens eine Rippe (26),
• wobei der Luftreifen (1) außerdem eine Scheitelbewehrung (3) radial innen bezüglich des Laufstreifens (2) enthält, die eine Arbeitsbewehrung (4) enthält,
• wobei die Arbeitsbewehrung (4) mindestens eine Arbeitsschicht (41, 42) enthält, die eine radial äußerste (41) Arbeitsschicht (41) enthält,
wobei die radial äußerste Arbeitsschicht (41) sich radial von einer radial inneren Fläche bis zu einer radial äußeren Fläche (SRE) erstreckt, wobei die radial äußerste Arbeitsschicht (41) von einem axial äußeren Rand der Arbeitsschicht bis zum gegenüberliegenden axial äußeren Rand durchgehende Verstärkungselemente (411) enthält, die mindestens teilweise metallisch sind, umhüllt von einem Elastomermaterial, parallel zueinander und mit der Umfangsrichtung (XX') des Luftreifens einen ausgerichteten Winkel bildend, dessen Absolutwert mindestens gleich 15° und höchstens gleich 50° ist, wobei die radial äußerste Arbeitsschicht (41) mindestens eine Welligkeit (412) lotrecht zu einer Rippe (26) enthält,
wobei die mindestens eine Welligkeit (412) der radial äußersten Arbeitsschicht (41) so ist, dass der Abschnitt der Arbeitsschicht (41) der Welligkeit (412) bezüglich der Punkte der Arbeitsschicht (41) lotrecht zur Mitte der Bodenseite (243) der der Welligkeit (412) am nächsten liegenden Kerbe (25) radial außen liegt,
**dadurch gekennzeichnet, dass** die mindestens eine Welligkeit (412) der radial äußersten Arbeitsschicht (41) so ist, dass lotrecht zu der eine Welligkeit (412) enthaltenden Rippe (26) der Lauffläche (21) der minimale radiale Abstand (do) zwischen der radial äußeren Fläche (SRE) der radial äußersten Arbeitsschicht (41) und der Lauffläche (21) um mindestens einen 1 mm geringer als der radiale Abstand (dc) zwischen der radial äußeren Fläche (SRE) der radial äußersten Arbeitsschicht (41) und der Lauffläche (21) ist, Abstand lotrecht zu der der betrachteten Welligkeit (412) am nächsten liegenden Kerbe (25),
und dass der minimale radiale Abstand (du) zwischen der radial äußeren Fläche (SRE) der radial äußersten Schicht der Scheitelbewehrung (3) und der Lauffläche (21) höchstens gleich der Tiefe D der nächstliegenden Umfangskerbe (25) erhöht um 2 mm ist.

2. Luftreifen nach dem vorhergehenden Anspruch, wobei lotrecht zu mindestens einer eine Welligkeit (412) enthaltenden Rippe (26) der Lauffläche (21) der minimale radiale Abstand (do) zwischen der radial äußeren Fläche (SRE) der radial äußersten Arbeitsschicht (41) und der Lauffläche (21) um mindestens 1,5 mm, vorzugsweise 2 mm, geringer als der radiale Abstand (dc) zwischen der radial äußeren Fläche (SRE) der äußersten Arbeitsschicht (41) und der Lauffläche (21) ist, Abstand lotrecht zu der der betrachteten Welligkeit (412) am nächsten liegenden Umfangskerbe (25).

3. Luftreifen nach dem einen oder anderen der vorhergehenden Ansprüche, wobei lotrecht zu mindestens einer eine Welligkeit (412) enthaltenden Rippe (26) der Lauffläche (21) der radiale Abstand (do) zwischen der radial äußeren Fläche (SRE) der radial äußersten Arbeitsschicht (41) und der Lauffläche (21) um höchstens 5 mm, vorzugsweise 3 mm, geringer als der radiale Abstand (dc) zwischen den Punkten der radial äußeren Fläche (SRE) der radial äußersten Arbeitsschicht (41) und der Lauffläche (21) ist, Abstand lotrecht zu der der betrachteten Welligkeit (412) am nächsten liegenden Umfangskerbe (25).

4. Luftreifen nach einem der vorhergehenden Ansprüche, wobei der radiale Abstand (d1) zwischen der radial äußeren Fläche (SRE) der radial äußersten Arbeitsschicht (41) und der Bodenseite (243) der Umfangskerben (25) mindestens gleich 1 mm und höchstens gleich 5 mm ist, vorzugsweise mindestens gleich 2 mm und höchstens gleich 4 mm.

5. Luftreifen nach einem der Ansprüche 1 bis 4, wobei eine Welligkeit (412) der radial äußersten Arbeitsschicht (41) lotrecht zu allen Rippen (26) der Lauffläche (21) vorhanden ist.

6. Luftreifen nach einem der Ansprüche 1 bis 4, wobei eine Welligkeit (412) der radial äußersten Arbeitsschicht (41) nur lotrecht zu den axial der mittleren Umfangsebene am nächsten liegenden Rippen (26) der Lauffläche (21) zu beiden Seiten dieser Ebene vorhanden ist.

7. Luftreifen, der über Verschleißanzeigen verfügt, nach einem der vorhergehenden Ansprüche, wobei der radiale Abstand (du) zwischen der radial äußeren Fläche (SRE) der radial äußersten Schicht der Scheitelbewehrung (3) und der Lauffläche (21) mindestens gleich dem radialen Abstand (df) zwischen der Lauffläche (21) und dem radial äußersten Punkt der Verschleißanzeigen (7) ist.

8. Luftreifen nach einem der vorhergehenden Ansprüche, wobei der minimale radiale Abstand (du) zwischen der radial äußeren Fläche (SRE) der radial äußersten Schicht der Scheitelbewehrung (3) und der Lauffläche (21) mindestens gleich der Tiefe D der am nächsten liegenden Umfangskerbe (25) verringert um 2 mm ist.

9. Luftreifen nach einem der vorhergehenden Ansprüche, wobei die Tiefe D der mindestens einen Umfangskerbe (25) mindestens gleich 6 mm und höchstens gleich 20 mm ist.

10. Luftreifen nach einem der vorhergehenden Ansprüche, wobei die radial äußerste Schicht der Arbeitsbewehrung aus Verstärkungselementen aus Textil, vorzugsweise vom Typ aliphatisches Polyamid, aromatisches Polyamid, Kombination von aliphatischem Polyamid und aromatischem Polyamid, Polyethylenterephthalat oder Rayon besteht, die parallel zueinander sind und mit der Umfangsrichtung (XX') des Luftreifens einen Winkel B höchstens gleich 10° im Absolutwert bilden.

11. Luftreifen nach einem der vorhergehenden Ansprüche, wobei mindestens ein Füllgummi (6) einer radialen Dicke mindestens gleich 0,3 mm lotrecht zu jeder Welligkeit (412) der radial äußersten Arbeitsschicht (41) ist.

12. Luftreifen nach dem vorhergehenden Anspruch, wobei der Laufstreifen (2) aus einer Kautschukmischung besteht, wobei der Füllgummi (6) eine Kautschukmischung ist, die einen dynamischen Verlust tan δ1, gemessen bei einer Temperatur von 10°C und unter einer Beanspruchung von 0,7 MPa bei 10 Hz, höchstens gleich und vorzugsweise um 30% niedriger als der dynamische Verlust tan δ2 des den Laufstreifen (2) bildenden Kautschukmaterials hat, gemessen bei einer Temperatur von 10°C und unter einer Belastung von 0,7 MPa bei 10 Hz.

13. Luftreifen nach einem der vorhergehenden Ansprüche, wobei die Scheitelbewehrung aus 2 Arbeitslagen mit entgegengesetzten Winkeln und einer Bandagierungslage besteht.

14. Luftreifen nach einem der Ansprüche 11 bis 13, wobei die Füllgummis (6) bezüglich aller Arbeitsschichten (41, 42) der Arbeitsbewehrung (4) radial innen liegen.

## Claims

1. Tyre (1) for a vehicle, comprising:
• a tread (2) which is intended to come into contact with the ground via a tread surface (21),
• the tread surface comprising grooves, the grooves forming a space opening onto the tread surface (21) and being delimited by at least two main lateral faces (241, 242) connected by a bottom face (243),
• at least one groove being substantially circumferential, being referred to as a circumferential groove (25), having a width W, defined by the distance between the two lateral faces (241, 242), at least equal to 5 mm, and a depth D, defined by the maximum radial distance between the tread surface (21) and the bottom face (243), at least equal to 4 mm,
• at least one rib (26),
• the tyre (1) further comprising a crown reinforcement (3) radially on the inside of the tread (2), and comprising a working reinforcement (4),
• the working reinforcement (4) comprising at least one working layer (41, 42), said at least one working layer (41, 42) comprising a radially outermost working layer (41),
• the radially outermost working layer (41) extending radially from a radially inner surface to a radially outer surface (SRE),
• the radially outermost working layer (41) comprising reinforcing elements (411) which are continuous from one axially outer edge of the working layer to the opposite axially outer edge, at least partially made of metal coated in an elastomer material, mutually parallel and which with the circumferential direction (XX') of the tyre form an oriented angle the absolute value of which is at least equal to 15° and at most equal to 50°,
the radially outermost working layer (41) comprising at least one undulation (412) in line with a rib (26),
the at least one undulation (412) in the radially outermost working layer (41) being such that the working layer (41) portion of the undulation (412) is radially on the outside of the points of the working layer (41) that are in line with the centre of the bottom face (243) of the circumferential groove (25) closest to the said undulation (412),
**characterized in that** the at least one undulation (412) in the radially outermost working layer (41) is such that, in line with the rib (26) on the tread surface (21) comprising an undulation (412), the minimum radial distance (do), between the radially outer surface (SRE) of the radially outermost working layer (41) and the tread surface (21), is at least 1 mm less than the radial distance (dc) between the radially outer surface (SRE) of the radially outermost working layer (41) and the tread surface (21), which is the distance in line with the circumferential groove (25) closest to the undulation (412) concerned,
**and in that** the minimum radial distance (du) between the radially outer surface (SRE) of the radially outermost layer of the crown reinforcement (3) and the tread surface (21) is at most equal to the depth D of the closest circumferential groove (25), increased by 2 mm.

2. Tyre according to the preceding claim, **in which,** in line with at least one rib (26) on the tread surface (21) comprising an undulation (412), the minimum radial distance (do) between the radially outer surface (SRE) of the radially outermost working layer (41) and the tread surface (21) is at least 1.5 mm, and preferably 2 mm, less than the radial distance (dc) between the radially outer surface (SRE) of the radially outermost working layer (41) and the tread surface (21), which is the distance in line with the circumferential groove (25) closest to the undulation (412) concerned.

3. Tyre according to either one of the preceding claims, **in which,** in line with at least one rib (26) on the tread surface (21) comprising an undulation (412), the radial distance (do) between the radially outer surface (SRE) of the radially outermost working layer (41) and the tread surface (21) is at most 5 mm, and preferably 3 mm, less than the radial distance (dc) between the points on the radially outer surface (SRE) of the radially outermost working layer (41) and the tread surface (21), which is the distance in line with the circumferential groove (25) closest to the undulation (412) concerned.

4. Tyre according to any one of the preceding claims, **in which** the radial distance (d1) between the radially outer surface (SRE) of the radially outermost working layer (41) and the bottom face (243) of the circumferential grooves (25) is at least equal to 1 mm and at most equal to 5 mm, preferably at least equal to 2 mm and at most equal to 4 mm.

5. Tyre according to any one of Claims 1 to 4, **in which** an undulation (412) of the radially outermost working layer (41) is present in line with all the ribs (26) on the tread surface (21).

6. Tyre according to any one of Claims 1 to 4, **in which** an undulation (412) of the radially outermost working layer (41) is present only in line with the ribs (26) on the tread surface (21) that are axially closest to the median circumferential plane, on each side of this plane.

7. Tyre having wear indicators according to the preceding claims, **in which** the radial distance (du) between the radially outer surface (SRE) of the radially outermost layer of the crown reinforcement (3) and the tread surface (21) is at least equal to the radial distance (df) between the tread surface (21) and the radially outermost point of the wear indicators (7).

8. Tyre according to any one of the preceding claims, **in which** the minimum radial distance (du) between the radially outer surface (SRE) of the radially outermost layer of the crown reinforcement (3) and the tread surface (21) is at least equal to the depth D of the closest circumferential groove (25), decreased by 2 mm.

9. Tyre according to any one of the preceding claims, **in which** the depth D of the at least one circumferential groove (25) is at least equal to 6 mm and at most equal to 20 mm.

10. Tyre according to any one of the preceding claims, **in which** the radially outermost layer of the working reinforcement is made up of reinforcing elements made of textile, preferably of the aliphatic polyamide, aromatic polyamide type, of a type involving a combination of aliphatic polyamide and aromatic polyamide, of polyethylene terephthalate or of rayon type, which are mutually parallel and form, with the circumferential direction (XX') of the tyre, an angle B at most equal to 10°, in terms of absolute value.

11. Tyre according to any one of the preceding claims, in which at least one element of padding rubber (6), having a radial thickness at least equal to 0.3 mm, is in line with any undulation (412) of the radially outermost working layer (41).

12. Tyre according to the preceding claim, the tread (2) being made up of a rubber compound, **in which** the element of padding rubber (6) is a rubber compound that has a dynamic loss tanδ1, measured at a temperature of 10°C and under a stress of 0.7 MPa at 10 Hz, at most equal to and preferably 30% less than the dynamic loss tanδ2 of the rubber material of which the tread (2) is made, measured at a temperature of 10°C and under a stress of 0.7 MPa at 10 Hz.

13. Tyre according to any one of the preceding claims, **in which** the crown reinforcement consists of 2 working plies of opposite angles and one hooping ply.

14. Tyre according to any one of claims 11 to 13, **in which** the elements of padding rubber (6) are radially on the inside of all the working layers (41, 42) of the working reinforcement (4).
